# EUROPÄISCHE PATENTSCHRIFT

(11) **EP 4 446 140 B1**
(45) Veröffentlichungstag und Bekanntmachung des Hinweises auf die Patenterteilung: **17.12.2025**
(21) Anmeldenummer: 24166191.7
(22) Anmeldetag: 26.03.2024
(51) Int. Cl.: B60G 17/015, B60G 17/06, F04C 11/00, H02K 5/00

(54) **DÄMPFUNGSANORDNUNG FÜR EINE ACHSE EINES KRAFTFAHRZEUGS UND KRAFTFAHRZEUG**
DAMPING ARRANGEMENT FOR AN AXLE OF A MOTOR VEHICLE AND MOTOR VEHICLE
DISPOSITIF D'AMORTISSEMENT POUR UN ESSIEU D'UN VÉHICULE AUTOMOBILE ET VÉHICULE AUTOMOBILE

(30) Priorität: 04.04.2023 DE 102023108630
(43) Veröffentlichungstag der Anmeldung: 16.10.2024
(73) Patentinhaber: RAPA Automotive GmbH & Co. KG, 95100 Selb (DE)
(72) Erfinder: Rubitzko, Tim, 95100 Selb (DE); Müller, Phillip, 70188 Stuttgart (DE)
(74) Vertreter: Klunker IP Patentanwälte PartG mbB

(56) Entgegenhaltungen:
- EP-A1- 2 187 055
- WO-A1-2012/023692
- DE-A1- 102019 118 384
- DE-B3- 102019 130 841

## Beschreibung

Die Erfindung betrifft eine Dämpfungsanordnung für eine Achse eines aktiven Fahrwerks eines Kraftfahrzeugs und ein Kraftfahrzeug.

DE 10 2017 117 658 B4 und DE 10 2019 115 492 B4 offenbaren jeweils ein Dämpfungssystem für ein Rad eines Kraftfahrzeugs, welches einen Dämpfer, eine von einem Elektromotor angetriebene Hydraulikpumpe, ein Hydraulikreservoir sowie mehrere Ventile aufweist. Der Dämpfer ist von einem doppelt-wirkenden Hydraulikzylinder und einem in demselben hin und her bewegbaren Kolben gebildet. Die Hydraulikpumpe ist über Hydraulikleitungen mit Hydraulikkammern des Hydraulikkolbens gekoppelt, wobei abhängig von der Förderrichtung der Hydraulikpumpe eine Bewegung des Kolbens in einer ersten Betätigungsrichtung oder in einer zweiten Betätigungsrichtung bereitstellbar ist.

Eine Dämpfungsanordnung einer Achse eines aktiven Fahrwerks verfügt über zwei Dämpfungssysteme, wobei mit jedem Rad der Achse ein Dämpfungssystem zusammenwirkt. Jedes Dämpfungssystem verfügt dabei typischerweise über ein separates Steuergerät, über welches der jeweilige Elektromotor angesteuert werden kann.

DE 10 2019 118 384 A1 offenbart eine Vorrichtung zur Bereitstellung von hydraulischer Energie in einem Fahrwerksystem, welches eine erste hydraulische Pumpe, einen ersten Elektromotor zum Antreiben derselben, eine zweite hydraulische Pumpe, einen zweiten Elektromotor zum Antreiben derselben und eine gemeinsame Elektronikeinheit aufweist. Diese gemeinsame Elektronikeinheit ist eingerichtet, den ersten und zweiten Elektromotor anzusteuern und so die beiden hydraulischen Pumpen zu betreiben. Die Elektronikeinheit benötigt relativ viel Bauraum zwischen den Elektromotoren.

DE 10 2019 130841 B3, WO 2012/023692 A1, EP 2 187 055 A1, DE 10 2012 204 212 A1, EP 2 864 638 B1 und DE 100 51 620 A1 offenbaren weiteren Stand der Technik.

Aufgabe der Erfindung ist es, eine Dämpfungsanordnung für eine Achse eines aktiven Fahrwerks bereitzustellen, dessen Steuerungseinrichtung besonders wenig Bauraum benötigt, um so eine kompakt bauende Dämpfungsanordnung bereitzustellen. Ferner soll ein Kraftfahrzeug mit einer solchen kompakt bauenden Dämpfungsanordnung bereitgestellt werden.

Diese Aufgabe wird durch eine Dämpfungsanordnung gemäß Patentanspruch 1 und durch ein Kraftfahrzeug gemäß Patentanspruch 10 gelöst.

Bei der erfindungsgemäßen Dämpfungsanordnung sind die Elektromotoren beider Dämpfungssystemen mit axial fluchtenden Rotationsachsen in einem Gehäuse angeordnet.

Bei der erfindungsgemäßen Dämpfungsanordnung sind die Elektromotoren beider Dämpfungssystemen von einer gemeinsamen Steuerungseinrichtung ansteuerbar.

Die gemeinsame Steuerungseinrichtung weist elektronische Baugruppen auf, die auf mindestens einer Platine angeordnet sind, wobei sich die mindestens eine Platine seitlich neben den Elektromotoren parallel zu den Rotationsachsen der Elektromotoren erstreckt.

Ein Zwischenkreiskondensator der gemeinsamen Steuerungseinrichtung erstreckt sich ausgehend von einer jeweiligen Patine senkrecht zu den Rotationsachsen der Elektromotoren in einen Freiraum zwischen den Elektromotoren hinein.

Die Erfindung stellt eine besonders kompakt bauende Dämpfungsanordnung bereit.

Die beiden Elektromotoren sind von einer gemeinsamen Steuerungseinrichtung aus ansteuerbar, wobei die mindestens eine Platine der Steuerungseinrichtung, welche die elektronischen Baugruppen zur Ansteuerung der Elektromotoren aufweist bzw. trägt, sich parallel zu den Rotationsachsen der Elektromotoren seitlich neben den Elektromotoren erstreckt. Der Zwischenkreiskondensator erstreckt sich ausgehend von einer Platine in den Freiraum zwischen den Elektromotoren. Hierdurch kann die Steuerungseinrichtung besonders bauraumsparend ausgeführt werden, wodurch letztendlich eine kompakt bauende Dämpfungsanordnung bereitgestellt werden kann.

Vorzugsweise sind die Elektromotoren beider Dämpfungssysteme in einem gemeinsamen Gehäuse angeordnet, wobei die mindestens eine Platine der gemeinsamen Steuerungseinrichtung auch in dem gemeinsamen Gehäuse angeordnet ist, und wobei der Freiraum zwischen den Elektromotoren, in den sich der Zwischenkreiskondensator hinein erstreckt, von dem gemeinsamen Gehäuse ausgebildet ist. Auch hierdurch kann die Steuerungseinrichtung besonders bauraumsparend ausgeführt werden, wodurch letztendlich eine kompakt bauende Dämpfungsanordnung bereitgestellt werden kann.

Vorzugsweise sind die elektronischen Baugruppen der gemeinsamen Steuerungseinrichtung auf unterschiedliche Platinen derart verteilt, dass eine erste Platine einen Niedervoltbereich mit Niedervolt-Baugruppen und einen galvanisch vom Niedervoltbereich getrennten Hochvoltbereich mit Hochvolt-Baugruppen aufweist, dass eine zweite Platine ausschließlich Hochvolt-Baugruppen aufweist und mit dem Hochvoltbereich der ersten Platine elektrisch verbunden ist, dass die zweite Platine zwischen den Elektromotoren und der ersten Platine angeordnet ist, und dass die zweite Platine den Zwischenkreiskondensator trägt, der sich ausgehend von einer den Elektromotoren zugewandten Seite der zweiten Platine in den Freiraum zwischen den Elektromotoren hinein erstreckt. Diese Ausführung ist besonders bevorzugt, um eine kompakt bauende Steuerungseinrichtung und damit eine kompakt bauendes Dämpfungsanordnung bereitzustellen.

Vorzugsweise trägt die zweite Platine als weitere Hochvolt-Baugruppe eine Gleichtaktdrossel, die auf einer von den Elektromotoren abgewandten Seite der zweiten Platine angeordnet ist, wobei die erste Platine eine Aussparung für die Gleichtaktdrossel aufweist, durch welche sich die Gleichtaktdrossel erstreckt. Auch dies ist besonders bevorzugt, um eine kompakt bauende Steuerungseinrichtung und damit eine kompakt bauende Dämpfungsanordnung bereitzustellen.

Die Betriebsspannung der Niedervolt-Baugruppen ist kleiner als 50 Volt, bevorzugt kleiner als 25 Volt, besonders bevorzugt kleiner als 15 Volt. Die Betriebsspannung der Hochvolt-Baugruppen ist größer als 200 V, bevorzugt größer als 400 Volt, besonders bevorzugt größer als 500 Volt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine schematisierte Darstellung einer erfindungsgemäßen Dämpfungsanordnung für die Räder einer Achse eines erfindungsgemäßen Kraftfahrzeugs;
- Fig. 2: einen ersten Querschnitt durch die erfindungsgemäße Dämpfungsanordnung im Bereich einer Steuerungseinrichtung;
- Fig. 3: einen zweiten Querschnitt durch die erfindungsgemäße Dämpfungsanordnung im Bereich der Steuerungseinrichtung;
- Fig. 4: eine erste Platine der Steuerungseinrichtung;
- Fig. 5: eine zweite Platine der Steuerungseinrichtung.

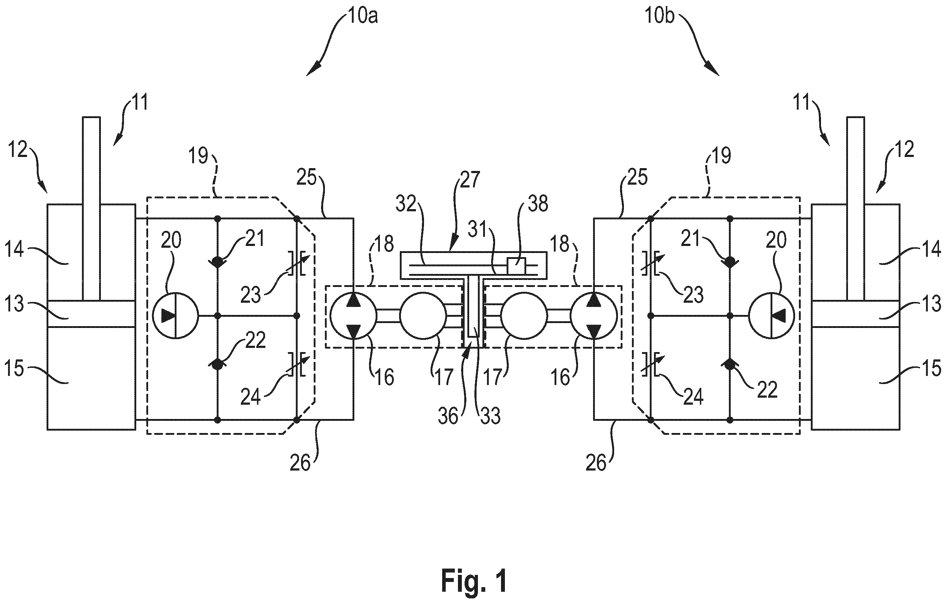

Fig. 1 zeigt stark schematisiert eine erfindungsgemäße Dämpfungsanordnung für zwei Räder einer Ache eines aktiven Fahrwerks eines Kraftfahrzeugs. Die Dämpfungsanordnung des aktiven Fahrwerks weist für jedes Rad ein Dämpfungssystem 10a, 10b auf.

Jedes der Dämpfungssysteme 10a, 10b verfügt über einen Dämpfer 11, welcher an ein nicht gezeigtes Radaufhängungssystem für das jeweilige nicht gezeigte Rad koppelbar ist. Der jeweilige Dämpfer 11 ist von einem doppelt-wirkenden Hydraulikzylinder 12 und einem Kolben 13 gebildet, wobei der Kolben 13 im Hydraulikzylinder 12 hin und her bewegbar ist, und zwar in Fig. 1 nach oben und unten.

Der als doppelt-wirkender Hydraulikzylinder ausgebildete Hydraulikzylinder 12 jedes der Dämpfungssysteme 10a, 10b verfügt zu jeder Seite des Kolbens 13 über eine Hydraulikkammer 14, 15. Abhängig davon, welchen der beiden Hydraulikkammern 14, 15 Hydrauliköl zugeführt wird und von welcher der beiden Hydraulikkammern 15, 14 Hydrauliköl abgeführt wird, kann der Kolben 13 entweder in einer ersten Betätigungsrichtung oder in einer entgegengesetzten zweiten Betätigungsrichtung verlagert werden. Bei der ersten Betätigungsrichtung des Kolbens 13 handelt es sich um eine Betätigung in Zugrichtung und bei der zweiten Betätigungsrichtung des Kolbens 13 um eine Betätigung in Druckrichtung.

Das jeweilige Dämpfungssystem 10a, 10b verfügt weiterhin über eine Hydraulikpumpe 16, die von einem jeweiligen Elektromotor 17 aus antreibbar ist. Hydraulikpumpe 16 und Elektromotor 17 bilden eine jeweilige Pumpen-Motor-Einheit 18. Bei der Hydraulikpumpe 16 handelt es sich um eine Reversierpumpe, die zur Bereitstellung unterschiedlicher Förderrichtungen vom jeweiligen Elektromotor 17 in unterschiedlichen Drehrichtungen angetrieben werden kann.

Das jeweilige Dämpfungssystem 10a, 10b der Fig. 1 verfügt weiterhin über eine Hydraulikeinheit 19, die ein Hydraulikreservoir 20 sowie Ventile 21, 22, 23, 24 aufweist. Bei den Ventilen 21, 22 handelt es sich um Rückschlagventile und bei den Ventilen 23, 24 um Dämpfungsventile. Das Hydraulikreservoir 20 jedes der Dämpfungssysteme 10a, 10b greift jeweils zwischen den Rückschlagventilen 21, 22 und zwischen den Dämpfungsventilen 23, 24 an Hydraulikleitungen der Hydraulikeinheit 19 an, die mit den Hydraulikkammern 14, 15 gekoppelt sind.

Abhängig von der Förderrichtung der Hydraulikpumpe 16 und vorzugsweise auch abhängig von der Stellung der Ventile 21, 22, 23, 24 des jeweiligen Dämpfungssystems 10a, 10b wird zur Verlagerung des Kolbens 13 in der ersten Bewegungsrichtung, also in Zugrichtung, der Hydraulikkammer 14 Öl zugeführt und von der Hydraulikkammer 15 Öl abgeführt, oder zur Bereitstellung einer zweiten Bewegungsrichtung des Kolbens 13 in der zweiten Bewegungsrichtung, also in Druckrichtung, der Hydraulikkammer 15 Öl zugeführt und von der Hydraulikkammer 14 Öl abgeführt.

Die Hydraulikpumpe 16 der Pumpen-Motor-Einheit 18 des jeweiligen Dämpfungssystems 10a, 10b ist mit der das Hydraulikreservoir 20 und die Ventile 21, 22, 23, 24 umfassenden Hydraulikeinheit 19, die vorzugsweise als Einheit am Dämpfer 11 bzw. am Hydraulikzylinder 12 verbaut ist, über Hydraulikleitungen 25, 26 verbunden.

Die Elektromotoren 17 beider Dämpfungssystemen 10a, 10b sind von einer gemeinsamen Steuerungseinrichtung 27 aus ansteuerbar. Die gemeinsame Steuerungseinrichtung 27 verfügt über elektronische Baugruppen, die der Ansteuerung der Elektromotoren 17 dienen.

Die Elektromotoren 17 der beiden Pumpen-Motor-Einheiten 18 sind in einem Gehäuse 28, vorzugsweise in einem gemeinsamen Gehäuse 28, aufgenommen.

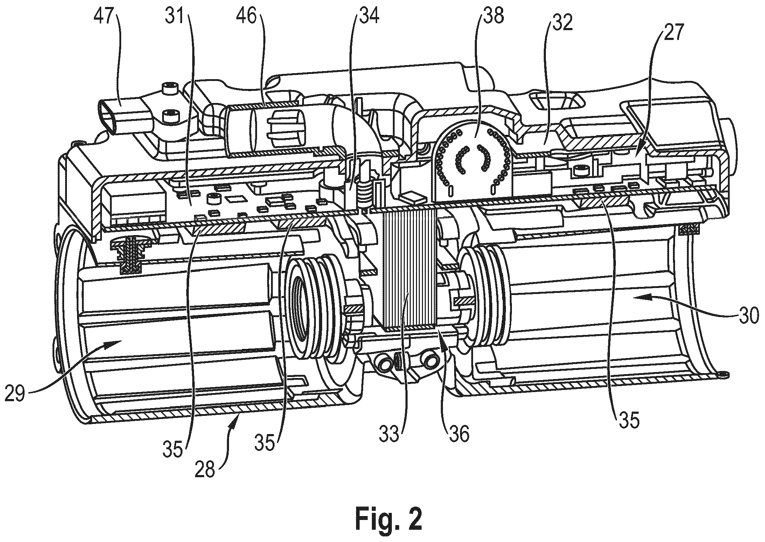

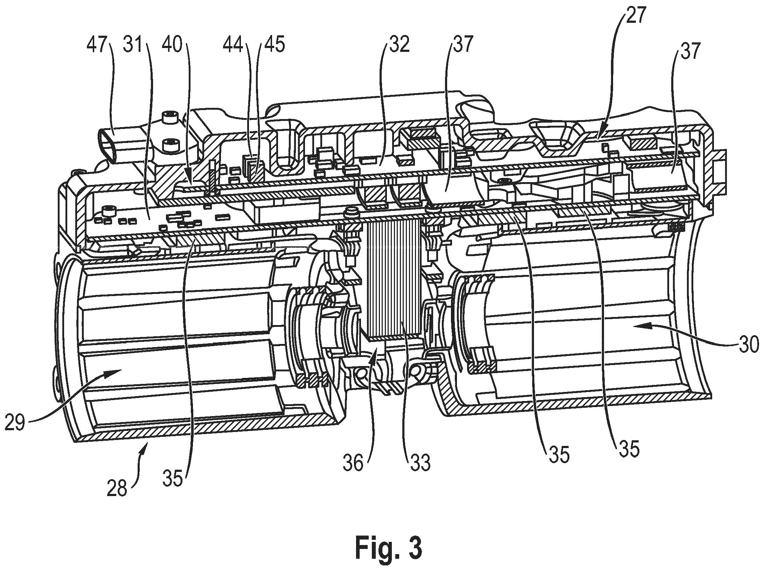

Fig. 2, 3 zeigen jeweils einen Längsschnitt durch ein gemeinsames Gehäuse 28 für die beiden Elektromotoren 17 der beiden Pumpen-Motor-Einheiten 18 mit einem ersten Aufnahmeabschnitt 29 für den ersten Elektromotor 17 des Dämpfungssystems 10a und einen zweiten Aufnahmeabschnitt 30 für den zweiten Elektromotor 17 des Dämpfungssystems 10b. Dann, wenn in den beiden Aufnahmeabschnitten 29, 30 die beiden Elektromotoren 17 der beiden Dämpfungssystemen 10a, 10b angeordnet sind, verlaufen Rotationsachsen der Elektromotoren 17 axial fluchtend.

Die gemeinsame Steuerungseinrichtung 27, welche die elektronischen Baugruppen zur Ansteuerung der Elektromotoren 17 aufweist, verfügt über mindestens eine Platine, im gezeigten Ausführungsbeispiel über zwei Platinen 31, 32. Die jeweilige Platine 31, 32 erstreckt sich seitlich neben den Elektromotoren 17 parallel zu den Rotationsachsen der Elektromotoren 17 im gemeinsamen Gehäuse 28 entlang der Aufnahmeabschnitte 29, 30 für die in Fig. 2 und 3 nicht gezeigten Elektromotoren.

Die Steuerungseinrichtung 27 verfügt als wesentliche Baugruppe über einen Zwischenkreiskondensator 33. Der Zwischenkreiskondensator 33 ist eine Hochvolt-Baugruppe der Steuerungseinrichtung 27, die zwischen einen Hochvolt-Anschluss 34 der Steuerungseinrichtung 27 und einen DC/AC-Wandler derselben geschaltet ist.

Die DC/AC-Wandler dienen der Wandlung von Gleichspannung in Wechselspannung, um die Elektromotoren 17 mit elektrischer Spannung bzw. elektrischem Strom zu versorgen. Für jeden Elektromotor 17 verfügt die Steuerungseinrichtung 27 über einen DC/AC-Wandler, der jeweils drei Leistungshalbleiterschalter 35 aufweist. Fig. 2 zeigt zwei Leistungshalbleiterschalter 35 des DC/AC-Wandlers für den in der Aufnahmekammer 29 anzuordnenden Elektromotor 17 und einen Leistungshalbleiterschalter 35 des DC/AC-Wandlers für den in dem Aufnahmeraum 30 anzuordnenden Elektromotor 17, wobei Fig. 3 die jeweils anderen Leistungshalbleiterschalter 35 der DC/AC-Wandler zeigt. Insgesamt sind demnach sechs Leistungshalbleiterschalter vorhanden, die vorzugsweise als IGBT-Transistoren bzw. bipolare Transistoren mit isolierter Gate-Elektrode ausgeführt sind.

Der Zwischenkreiskondensator 33 erstreckt sich ausgehend von einer Platine 31 senkrecht zu der Platine 31 und damit senkrecht zu den Rotationsachsen der Elektromotoren 17 in einen Freiraum 36 des Gehäuses 28 zwischen den Elektromotoren 17 hinein, sodass derselbe zwischen den Elektromotoren 17 bzw. zwischen den beiden Aufnahmeräumen 29, 30 angeordnet ist.

Wie bereits ausgeführt, weist die gemeinsame Steuerungseinrichtung 27 für die beiden Elektromotoren 17 vorzugsweise mehrere Platinen auf, nämlich im gezeigten Ausführungsbeispiel die beiden Platinen 31, 32. Eine erste Platine 32 weist dabei einen Niedervoltbereich mit Niedervolt-Baugruppen und einen galvanisch vom Niedervoltbereich getrennten Hochvoltbereich mit Hochvolt-Baugruppen auf. Eine zweite Platine 31 verfügt ausschließlich über Hochvolt-Baugruppen und ist mit dem Hochvoltbereich der ersten Platine 32 elektrisch verbunden, vorzugsweise über mindestens ein Flachbandkabel 37 (siehe Fig. 3).

Die beiden Platinen 31, 32 erstrecken sich seitlich innerhalb des Gehäuses 28 neben den Aufnahmeräumen 29, 30 und damit seitlich neben den von denselben aufzunehmenden Elektromotoren 17 parallel zu den Rotationsachsen der Elektromotoren 17, wobei die zweite Platine 31 zwischen den Elektromotoren 17 und der ersten Platine 32 angeordnet ist. Die zweite Platine 31 trägt dabei den Zwischenkreiskondensator 33, der sich ausgehend von einer den Elektromotoren 17 zugewandten Seite der zweiten Platine 31 in den Freiraum 36 zwischen den Elektromotoren 17 hinein erstreckt.

Als weitere Hochvolt-Baugruppe weist die zweite Platine 31 eine Gleichtaktdrossel 38 auf. Die Gleichtaktdrossel 38 wird auch als Common Mode Choke bezeichnet.

Die Gleichtaktdrossel 38 ist auf einer von den Elektromotoren 17 abgewandten Seite der zweiten Platine 31 angeordnet und erstreckt sich durch eine Aussparung 39 in der ersten Platine 32 in die entgegengesetzte Richtung wie der Zwischenkreiskondensator 33.

Die zweite Platine 31 verfügt demnach als Hochvolt-Baugruppen über den Hochvolt-Anschluss 32, den Zwischenkreiskondensator 33, die Gleichtaktdrossel 38 sowie die von den Leistungshalbleiterschaltern 35 gebildeten DC/AC-Wandler.

Die erste Platine 31 ist, wie bereits ausgeführt, in den Niedervoltbereich mit den Niedervolt-Baugruppen und den Hochvoltbereich mit den Hochvolt-Baugruppen untergliedert, wobei der Niedervoltbereich von dem Hochvoltbereich über eine galvanische Isolation getrennt ist.

Zu den Niedervolt-Baugruppen des Niedervoltbereichs der ersten Platine 32 zählt ein Niedervolt-Anschluss 40, ein Niedervolt-Verteiler 41 sowie ein Signalwandler 42, welcher analoge CAN-Signale in digitale CAN-Signale wandelt.

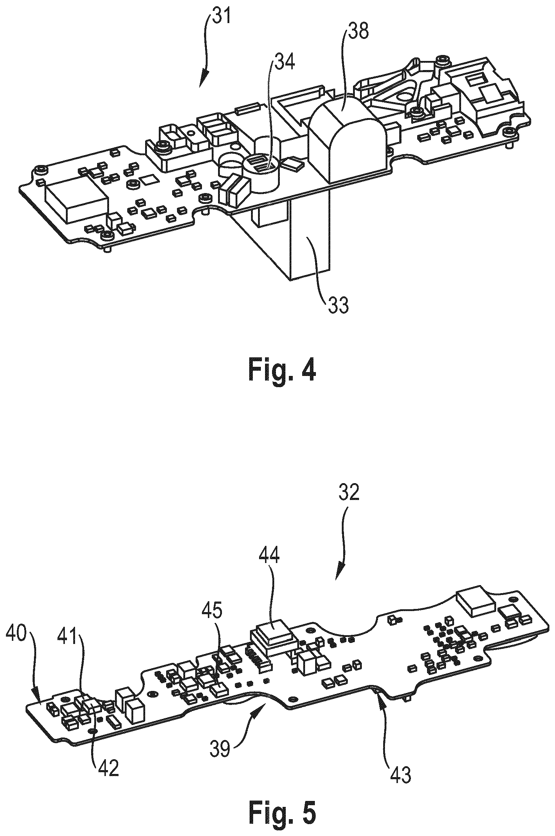

Zu den Hochvolt-Baugruppen des Hochvoltbereichs der ersten Platine 32 zählt insbesondere eine CPU 43, die auch der Ansteuerung der DC/AC-Wandler der zweiten Platine 31 dient. Die CPU 43 stellt eine Hochvolt-Ansteuerung für die hochvoltseitigen DC/AC-Wandler beider Elektromotoren 17 bereit. Die CPU 43 ist in Fig. 5 auf der Unterseite der ersten Platine 32 angeordnet.

Zwischen die CPU 43 und den Niedervoltbereich der ersten Platine 31 sind als Trennbaugruppen der galvanischen Isolation eine Transformator-Baugruppe 44 und ein Digital-Isolator 45 geschaltet. So ist die CPU 43 sowohl spannungsseitig als auch signalseitig galvanisch vom Niederspannungsbereich entkoppelt.

Fig. 2, 3 zeigen weiterhin einen Hochvolt-Steckverbinder 46 zur Kontaktierung des Hochvolt-Anschlusses 34 der zweiten Platine 31 und einen Niedervolt-Steckverbinder 47 zur Kontaktierung des Niedervolt-Anschlusses 40 der ersten Platine 32.

Die Betriebsspannung der Niedervolt-Baugruppen ist kleiner als 50 Volt, bevorzugt kleiner als 25 Volt, besonders bevorzugt kleiner als 15 Volt. Die Betriebsspannung der Hochvolt-Baugruppen ist größer als 200 V, bevorzugt größer als 400 Volt, besonders bevorzugt größer als 500 Volt.

Die gemeinsame Steuerungseinrichtung 27 verfügt über eine besonders kompakte Bauform, sodass letztendlich auch für die Dämpfungsanordnung eine kompakte Bauform gewährleistet werden kann.

Bei einem Kraftfahrzeug mit mehreren Achsen ist jeder Achse eine Dämpfungsanordnung zugeordnet.

## Patentansprüche

1. Dämpfungsanordnung für eine Achse eines aktiven Fahrwerks eines Kraftfahrzeugs, mit Dämpfungssystemen (10a, 10b), die derart eingerichtet sind, dass mit jedem Rad der Achse eines der Dämpfungssysteme (10a, 10b) zusammenwirkt,
wobei jedes der Dämpfungssysteme (10a, 10b) folgende Baugruppen aufweist:
einen Dämpfer (11), der einen doppelt-wirkenden Hydraulikzylinder (12) und einen Kolben (13) aufweist, wobei der Dämpfer (11) mit einem Radaufhängungssystem des jeweiligen Rads koppelbar ist,
eine Hydraulikpumpe (16) und einen Elektromotor (17) zum Antreiben der jeweiligen Hydraulikpumpe (16), wobei die Hydraulikpumpe (16) eine Reversierpumpe ist, die zur Bereitstellung unterschiedlicher Förderrichtungen vom Elektromotor (17) in unterschiedlichen Drehrichtungen antreibbar ist,
eine ein Hydraulikreservoir (20) und Ventile (21, 22, 23, 24) aufweisende Hydraulikeinheit (19), wobei die Hydraulikpumpe (16) und die Hydraulikeinheit (19) des jeweiligen Dämpfungssystems (10a, 10b) mit Hydraulikkammern (14, 15) des Hydraulikzylinders (13) des jeweiligen Dämpfungssystems (10a, 10b) derart zusammenwirken, dass abhängig von der Förderrichtung der Hydraulikpumpe (16) eine Bewegung des Kolbens (13) in einer ersten Betätigungsrichtung oder in einer zweiten Betätigungsrichtung bereitstellbar ist,
**dadurch gekennzeichnet, dass**
die Elektromotoren (17) beider Dämpfungssysteme (10a, 10b) mit axial fluchtenden Rotationsachsen in einem Gehäuse (28) angeordnet sind,
die Elektromotoren (17) beider Dämpfungssysteme (10a, 10b) von einer gemeinsamen Steuerungseinrichtung (27) der Dämpfungsanordnung ansteuerbar sind,
die gemeinsame Steuerungseinrichtung (27) elektronische Baugruppen aufweist, die auf mindestens einer Platine (31, 32) angeordnet sind,
wobei sich die mindestens eine Platine (31, 32) seitlich neben den Elektromotoren (17) parallel zu den Rotationsachsen der Elektromotoren (17) erstreckt,
wobei sich ein Zwischenkreiskondensator (33) der gemeinsamen Steuerungseinrichtung (27) ausgehend von einer jeweiligen Platine (31) senkrecht zu den Rotationsachsen der Elektromotoren (17) in einen Freiraum zwischen den Elektromotoren (17) hinein erstreckt.

2. Dämpfungsanordnung nach Anspruch 1, wobei
wobei das Gehäuse (28) ein gemeinsames Gehäuse ausbildet und die Elektromotoren (17) beider Dämpfungssysteme (10a, 10b) in dem gemeinsamen Gehäuse (28) angeordnet sind.

3. Dämpfungsanordnung nach Anspruch 2, wobei
die mindestens eine Platine (31, 32) der Steuerungseinrichtung (27) auch in dem gemeinsamen Gehäuse (28) angeordnet ist.

4. Dämpfungsanordnung nach Anspruch 2 oder 3, wobei
der Freiraum zwischen den Elektromotoren (17), in den sich der Zwischenkreiskondensator (33) hinein erstreckt, von dem gemeinsamen Gehäuse (28) ausgebildet ist.

5. Dämpfungsanordnung nach einem der Ansprüche 1 bis 4, wobei
die elektronischen Baugruppen der gemeinsamen Steuerungseinrichtung (27) auf unterschiedliche Platinen (31, 32) derart verteilt sind, dass
eine erste Platine (32) einen Niedervoltbereich mit Niedervolt-Baugruppen und einen galvanisch vom Niedervoltbereich getrennten Hochvoltbereich mit Hochvolt-Baugruppen aufweist,
eine zweite Platine (31) ausschließlich Hochvolt-Baugruppen aufweist und mit dem Hochvoltbereich der ersten Platine elektrisch verbunden ist,
die zweite Platine (31) zwischen den Elektromotoren (17) und der ersten Platine (32) angeordnet ist,
die zweite Platine (31) den Zwischenkreiskondensator (33) trägt, der sich ausgehend von einer den Elektromotoren (17) zugewandten Seite der zweiten Platine (31) in den Freiraum zwischen den Elektromotoren (17) hinein erstreckt.

6. Dämpfungsanordnung nach Anspruch 5, wobei
die zweite Platine (31) mit dem Hochvoltbereich der ersten Platine (32) über mindestens ein Flachbandkabel (37) elektrisch verbunden ist.

7. Dämpfungsanordnung nach Anspruch 5 oder 6, wobei
die zweite Platine (31) als weitere Hochvolt-Baugruppe eine Gleichtaktdrossel (38) aufweist, die auf einer von den Elektromotoren (17) abgewandten Seite der zweiten Platine (31) angeordnet ist.

8. Dämpfungsanordnung nach Anspruch 7, wobei
die erste Platine (32) eine Aussparung (39) für die Gleichtaktdrossel (38) aufweist, durch welche sich die Gleichtaktdrossel (38) erstreckt.

9. Dämpfungsanordnung nach einem der Ansprüche 5 bis 8, wobei
die Betriebsspannung der Niedervolt-Baugruppen kleiner als 50 Volt ist, bevorzugt kleiner als 25 Volt ist, besonders bevorzugt kleiner als 15 Volt ist,
die Betriebsspannung der Hochvolt-Baugruppen größer als 200 Volt ist, bevorzugt größer als 400 Volt ist, besonders bevorzugt größer als 500 Volt ist.

10. Kraftfahrzeug, mit mehreren Achsen, wobei jeder Achse eine Dämpfungsanordnung nach einem der Ansprüche 1 bis 9 zugeordnet ist.

## Claims

1. A damping arrangement for an axle of an active chassis of a motor vehicle, having damping systems (10a, 10b), which are arranged such that one of the damping systems (10a, 10b) interacts with each wheel of the axle, wherein each of the damping systems (10a, 10b) has the following construction groups:
a damper (11) having a double-acting hydraulic cylinder (12) and a piston (13), wherein the damper (11) can be coupled with a wheel suspension system of the respective wheel,
a hydraulic pump (16) and an electric motor (17) for driving the respective hydraulic pump (16), wherein the hydraulic pump (16) is a reversing pump which can be driven by the electric motor (17) in different rotational directions for providing different conveyance directions,
a hydraulic unit (19) having a hydraulic reservoir (20) and valves (21, 22, 23, 24), wherein the hydraulic pump (16) and the hydraulic unit (19) of the respective damping system (10a, 10b) interact with hydraulic chambers (14, 15) of the hydraulic cylinder (13) of the respective damping system (10a, 10b) in such a manner that, in dependence on the conveyance direction of the hydraulic pump (16), a movement of the piston (13) can be provided in a first actuation direction or in a second actuation direction,
**characterized in that**
the electric motors (17) of both damping systems (10a, 10b) are arranged with axially aligned rotational axes in a casing (28),
the electric motors (17) of both damping systems (10a, 10b) can be regulated by a common control device (27) of the damping arrangement,
the common control device (27) has electronic construction groups which are arranged on at least one circuit board (31, 32),
wherein the at least one circuit board (31, 32) extends laterally next to the electric motors (17) parallel to the rotational axes of the electric motors (17),
wherein an intermediate circuit capacitor (33) of the common control device (27) extends, starting from a respective circuit board (31), perpendicularly to the rotational axes of the electric motors (17) into a free space between the electric motors (17).

2. The damping arrangement according to claim 1, wherein
the casing (28) forms a common casing and the electric motors (17) of both damping systems (10a, 10b) are arranged in the common casing (28).

3. The damping arrangement according to claim 2, wherein
the at least one circuit board (31, 32) of the control device (27) is arranged in the common casing (28) as well.

4. The damping arrangement according to claim 2 or 3, wherein
the free space between the electric motors (17) into which the intermediate circuit capacitor (33) extends is formed by the common casing (28).

5. The damping arrangement according to any of claims 1 to 4, wherein
the electronic construction groups of the common control device (27) are distributed over different circuit boards (31, 32) in such a manner that
a first circuit board (32) has a low-voltage region with low-voltage construction groups and a high-voltage region with high-voltage construction groups which is galvanically separated from the low-voltage region,
a second circuit board (31) has exclusively high-voltage construction groups and is electrically connected to the high-voltage region of the first circuit board,
the second circuit board (31) is arranged between the electric motors (17) and the first circuit board (32),
the second circuit board (31) carries the intermediate circuit capacitor (33), which extends, starting from a side of the second circuit board (31) facing towards the electric motors (17), into the free space between the electric motors.

6. The damping arrangement according to claim 5, wherein
the second circuit board (31) is electrically connected to the high-voltage region of the first circuit board (32) via at least one flat ribbon cable (37).

7. The damping arrangement according to claim 5 or 6, wherein
the second circuit board (31) has a common mode choke (38) as a further high-voltage construction group which is arranged on a side of the second circuit board (31) facing away from the electric motors (17).

8. The damping arrangement according to claim 7, wherein
the first circuit board (32) has a gap (39) for the common mode choke (38) through which the common mode choke (38) extends.

9. The damping arrangement according to any of claims 5 to 8, wherein
the operating voltage of the low-voltage construction groups is lower than 50 Volt, preferably lower than 25 Volt, particularly preferably lower than 15 Volt,
the operating voltage of the high-voltage construction groups is higher than 200 Volt, preferably higher than 400 Volt, particularly preferably higher than 500 Volt.

10. A motor vehicle with several axles, wherein to each axle there is allocated a damping arrangement according to any of claims 1 to 9.

## Revendications

1. Agencement d'amortissement destiné à un essieu d'un châssis actif d'un véhicule automobile, ayant des systèmes d'amortissement (10a, 10b) conçus de telle façon que, avec chaque roue de l'essieu, un des systèmes d'amortissement (10a, 10b) interagit,
cependant que chacun des systèmes d'amortissement (10a, 10b) comporte les modules suivants:
un amortisseur (11) comportant un vérin hydraulique à double effet (12) et un piston (13), cependant que l'amortisseur (11) peut être couplé avec un système de suspension de roue de la roue respective,
une pompe hydraulique (16) et un moteur électrique (17) pour l'entraînement de la pompe hydraulique respective (16), cependant que la pompe hydraulique (16) est une pompe réversible qui peut être entraînée dans différents sens de rotation par le moteur électrique (17) pour la mise à disposition de différents sens de transport,
une unité hydraulique (19) comportant un réservoir hydraulique (20) et des soupapes (21, 22, 23, 24), cependant que la pompe hydraulique (16) et l'unité hydraulique (19) du système d'amortissement (10a, 10b) respectif interagissent de telle manière avec des chambres hydrauliques (14, 15) du vérin hydraulique (13) du système d'amortissement (10a, 10b) respectif que, en fonction du sens de transport de la pompe hydraulique (16), un mouvement du piston (13) dans un premier sens d'actionnement ou dans un deuxième sens d'actionnement peut être mis à disposition,
**caractérisé en ce que**
les moteurs électriques (17) des deux systèmes d'amortissement (10a, 10b) sont agencés avec des axes de rotation alignés axialement dans un boîtier (28),
les moteurs électriques (17) des deux systèmes d'amortissement (10a, 10b) peuvent être commandés par un dispositif de commande (27) commun de l'agencement d'amortissement,
le dispositif de commande (27) commun comporte des modules électroniques agencés sur au moins une carte de circuit imprimé (31, 32),
cependant que la au moins une carte de circuit imprimé (31, 32) s'étend latéralement à côté des moteurs électriques (17) parallèlement aux axes de rotation des moteurs électriques (17),
cependant qu'un condensateur de circuit intermédiaire (33) du dispositif de commande (27) commun s'étend, à partir d'une carte de circuit imprimé respective, perpendiculairement aux axes de rotation des moteurs électriques (17) dans un espace libre situé entre les moteurs électriques (17).

2. Agencement d'amortissement selon la revendication 1, cependant que le boîtier (28) est réalisé sous forme d'un boîtier commun, et les moteurs électriques (17) des deux systèmes d'amortissement (10a, 10b) sont agencés dans le boîtier commun (28).

3. Agencement d'amortissement selon la revendication 2, cependant que
la au moins une carte de circuit imprimé (31, 32) du dispositif de commande (27) est aussi agencée dans le boîtier commun (28).

4. Agencement d'amortissement selon la revendication 2 ou 3, cependant que
l'espace libre situé entre les moteurs électriques (17) dans lequel s'étend le condensateur de circuit intermédiaire (33) est constitué par le boîtier commun (28).

5. Agencement d'amortissement selon une des revendications de 1 à 4, cependant que
les modules électroniques du dispositif de commande (27) commun sont répartis de telle façon sur différentes cartes de circuit imprimé (31, 32) que
une première carte de circuit imprimé (32) a une zone basse tension avec modules basse tension et une zone haute tension avec modules haute tension galvaniquement séparée de la zone basse tension,
une deuxième carte de circuit imprimé (31) a exclusivement des modules haute tension et est reliée électriquement à la zone haute tension de la première carte de circuit imprimé,
la deuxième carte de circuit imprimé (31) est agencée entre les moteurs électriques (17) et la première carte de circuit imprimé (32),
la deuxième carte de circuit imprimé (31) porte le condensateur de circuit intermédiaire (33), lequel, à partir d'un côté, de la deuxième carte de circuit imprimé (31), tourné vers les moteurs électriques (17), s'étend dans un espace libre situé entre les moteurs électriques (17).

6. Agencement d'amortissement selon la revendication 5, cependant que
la deuxième carte de circuit imprimé (31) est reliée électriquement à la zone haute tension de la première carte de circuit imprimé (32) par l'intermédiaire d'au moins un câble plat (37).

7. Agencement d'amortissement selon la revendication 5 ou 6, cependant que
la deuxième carte de circuit imprimé (31) comporte en tant qu'autre module haute tension une self de mode commun (38) agencée sur un côté, de la deuxième carte de circuit imprimé (31), tourné à l'opposé des moteurs électriques (17).

8. Agencement d'amortissement selon la revendication 7, cependant que
la première carte de circuit imprimé (32) a un évidement (39) pour la self de mode commun (38) à travers lequel s'étend la self de mode commun (38).

9. Agencement d'amortissement selon une des revendications de 5 à 8, cependant que
la tension de service des modules basse tension est inférieure à 50 volt, de préférence inférieure à 25 volt, particulièrement de préférence inférieure à 15 volt,
la tension de service des modules haute tension est supérieure à 200 volt, de préférence supérieure à 400 volt, particulièrement de préférence supérieure à 500 volt.

10. Véhicule automobile ayant plusieurs essieux, cependant que, à chaque essieu, un agencement d'amortissement selon une des revendications de 1 à 9 est affecté.
